(19) Europäisches Patentamt
European Patent Office
Office européen des brevets

(11) **EP 2 245 334 B1**

(12) **EUROPEAN PATENT SPECIFICATION**

(45) Date of publication and mention
of the grant of the patent:
**04.06.2014 Bulletin 2014/23**

(21) Application number: **09711924.2**

(22) Date of filing: **04.02.2009**

(51) Int Cl.:
*F16G 11/00* *(2006.01)* *F16G 11/04* *(2006.01)*

(86) International application number:
**PCT/US2009/000713**

(87) International publication number:
**WO 2009/105156 (27.08.2009 Gazette 2009/35)**

(54) **CABLE TERMINATION WITH AN ELLIPTICAL WALL PROFILE**

KABELABSCHLUSS MIT ELLIPTISCHEM WANDPROFIL

TERMINAISON DE CÂBLE À PROFILÉ DE PAROI ELLIPTIQUE

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **19.02.2008 US 70439**

(43) Date of publication of application:
**03.11.2010 Bulletin 2010/44**

(73) Proprietor: **Bright Technologies, Llc
Havana, FL 32333 (US)**

(72) Inventors:
• **CAMPBELL, Richard, V.
Havana, FL 32333 (US)**
• **SEDILES, David
Tallahassee, FL 32304 (US)**

(74) Representative: **Moore, Derek
Jensen & Son
366-368 Old Street
London EC1V 9LT (GB)**

(56) References cited:
US-A- 3 723 636        US-A1- 2005 173 147
US-A1- 2005 173 147    US-A1- 2006 062 525
US-A1- 2006 062 525

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

1. Technical Field.

This invention relates to the field of cables and cable terminations. More specifically, the invention comprises a cable termination including an elliptical wall profile.

2. Background Art.

There are many known devices for mounting a termination on the end of a wire, rope, or cable. The individual components of a wire rope are generally referred to as "strands," whereas the individual components of natural-fiber cables or synthetic cables are generally referred to as "fibers." For purposes of this application, the term "strands" will be used generically to refer to both.

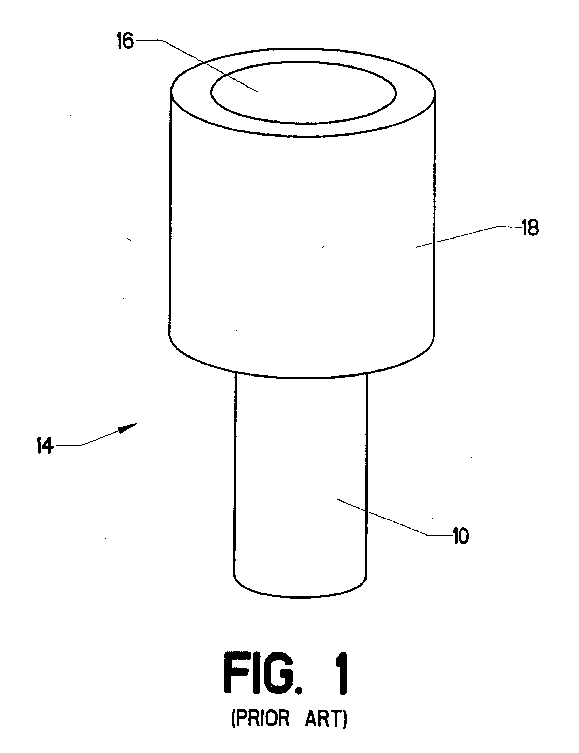

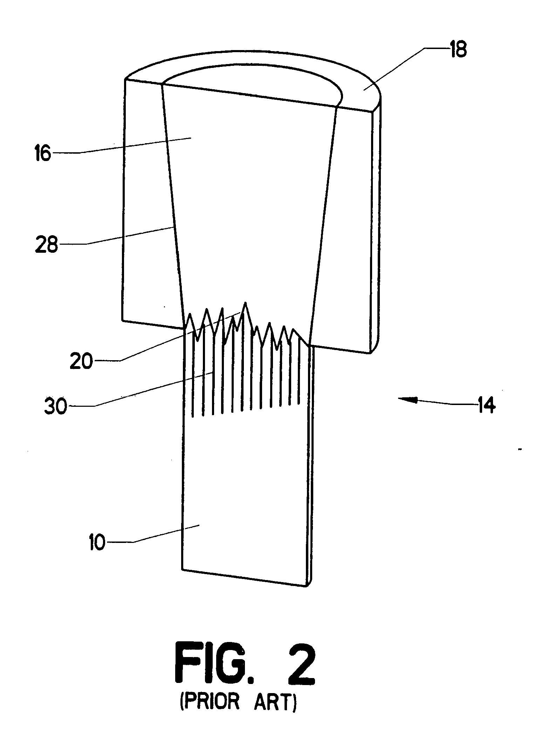

In order to carry a tensile load an appropriate connective device must be added to a cable. A connective device is typically added to an end of the cable, but may also be added at some intermediate point between the two ends. FIG. 1 shows a connective device which is well known in the art. An anchor **18** has been attached to the free end of a cable **10** to form a termination **14.** FIG. 2 shows the same assembly sectioned in half to show its internal details. Anchor **18** includes internal passage **28** running through its mid portion. In order to affix anchor **18** to cable **10,** the strands proximate the end of cable **10** are exposed and placed within internal passage **28** (They may also be splayed or fanned to conform to the expanding shape of the passage).

Liquid potting compound is added to the region of strands lying within the anchor (either before or after the strands are placed within the anchor). This liquid potting compound solidifies while the strands are within the anchor to form potted region **16** as shown in FIG. 2. Most of potted region **16** consists of a composite structure of strands and solidified potting compound. Potting transition **20** is the boundary between the length of strands which is locked within the solidified potting compound and the freely-flexing length within the rest of the cable (flexible region **30**).

The unified assembly shown in FIGs. 1 and 2 is referred to as a "termination" (designated as **"14"** in the view). The mechanical fitting itself is referred to as an "anchor" (designated as **"18"** in the view). Thus, an anchor is affixed to a cable to form a termination. These terms will be used consistently throughout this disclosure.

Cables such as the one shown in FIG. 2 are used to carry tensile loads. When a tensile load is placed on the cable, this load must be transmitted to the anchor, and then from the anchor to whatever component the cable attaches to (typically through a thread, flange, or other fastening feature found on the anchor). As an example, if the cable is used in a winch, the anchor might include a large hook.

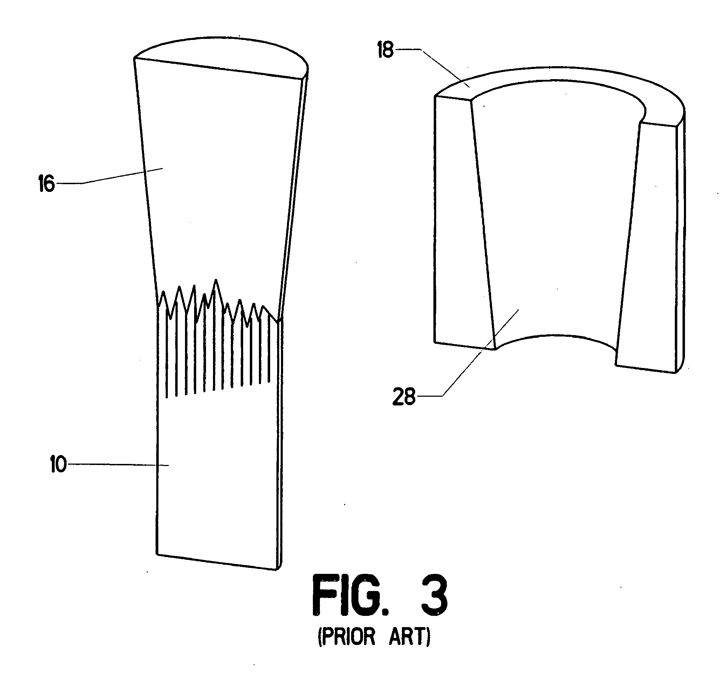

Those skilled in the art will realize that potted region **16** is locked within anchor **18** by a mechanical interference resulting from the geometry of internal passage **28.** FIG. 3 is a sectional view showing the potted region removed from the anchor. As shown in FIG. 3, internal passage **28** molds the shape of potted region **16** so that a mechanical interference is created between the two conical surfaces. When the potted region first solidifies, a surface bond is often created between the potted region and the wall of the tapered cavity. When the cable is initially loaded, the potted region is pulled downward (with respect to the orientation shown in the view) within the tapered cavity. This action is often referred to as "seating" the potted region. The surface bond typically fractures. Potted region **16** is then retained within tapered cavity **28** solely by the mechanical interference of the mating male and female conical surfaces.

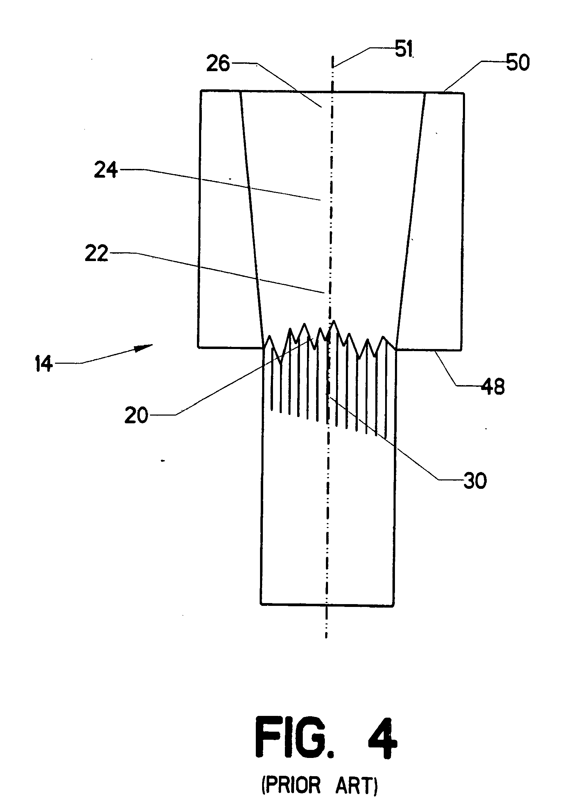

FIG. 4 shows the assembly of FIG. 3 in a sectioned elevation view. The geometry is all revolved around central axis **51,** which runs through the anchor from neck anchor boundary **48** to distal anchor boundary **50.** One can define the slope of the wall profile at any point along the internal passage with respect to this central axis. For purposes of this disclosure, a positive slope for the wall profile will mean a slope in which the distance from the central axis to the wall is increasing as one proceeds from the proximal anchor boundary to the distal anchor boundary. As mentioned previously, the seating process places considerable shearing stress on the surface bond between the potted region and the wall, which often breaks. Further downward movement is arrested by the compressive forces exerted on the potted region by the shape of the internal passage (Spatial terms such as "downward", "upper", and "mid" are used throughout this disclosure. These terms are to be understood with respect to the orientations shown in the views. The assemblies shown can be used in any orientation. Thus, if a cable assembly is used in an inverted position, what was described as the "upper region" herein may be the lowest portion of the assembly).

The compressive stress on potted region **16** tends to be maximized in neck region **22.** Flexural stresses tend to be maximized in this region as well, since it is the transition between the freely flexing and rigidly locked regions of the strands. The tensile stresses within potted region **16** likewise tend to be maximized in neck region **22,** since it represents the minimum cross-sectional area. Thus, it is typical for terminations such as shown in FIGs. 1-4 to fail within neck region **22.**

In FIG. 4, potted region **16** is conceptually divided into neck region **22,** mid region **24,** and distal region **26.** Potting transition **20** denotes the interface between the relatively rigid potted region **16** and the relatively freely flexing flexible region **30.** Stress is generally highest in neck region **22,** lower in mid region **24,** and lowest in distal region **26.**

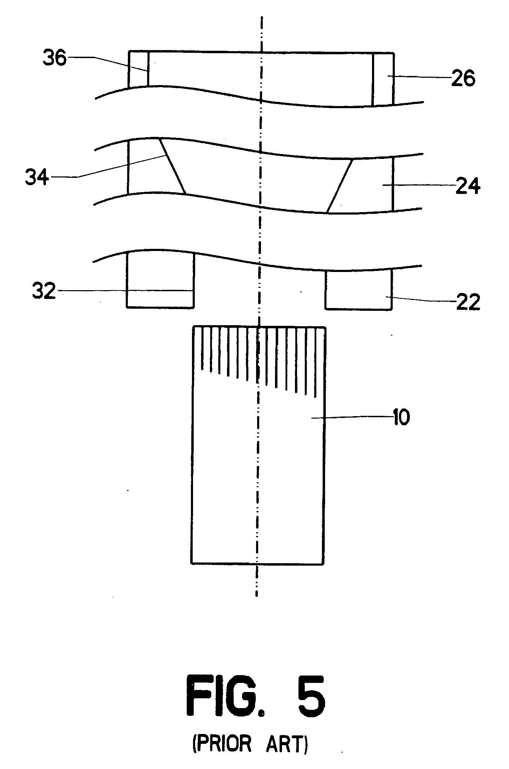

The prior art anchor shown in FIGs. 1-4 uses a revolved linear wall profile (a conical shape for the internal passage). While this profile is commonly used, it is far from optimum. The design considerations present in the neck region, mid region, and distal region are quite different. FIG. 5 illustrates - in very general terms - the nature of these design considerations. In neck region **22,** the wall profile is preferably tangent or nearly tangent to the cable's outside diameter. Thus, tangent wall **32** is ideal for neck region **22.**

The solidified potted region expands as one proceeds from the anchor's neck region toward the distal region. A relatively rapid expansion can be used to form a "shoulder" in the wall profile. FIG. 5 shows a shoulder **34** formed by a relatively steeply sloping wall profile in mid region **24.** This forms a solid mechanical interference which will hold the potted mass in place. The potted mass lying between the shoulder and the neck region is preferably allowed to elongate ("seat") somewhat under tension, thereby forming a more even stress distribution. Thus, the inclusion of a shoulder is preferable for the mid region.

Of course, if one continues the steeply sloping wall profile of the shoulder toward the anchor's distal end, the anchor will have to be made very large to contain the profile. The stress tends to diminish as one approaches the distal region. Thus, there is little to be gained by continuing the steeply sloping profile of the shoulder. At some point it is preferable to discontinue the sloping wall profile and employ a profile having a more moderate slope. FIG. 5 shows the use of such a portion, which is designated as extension wall **36.**

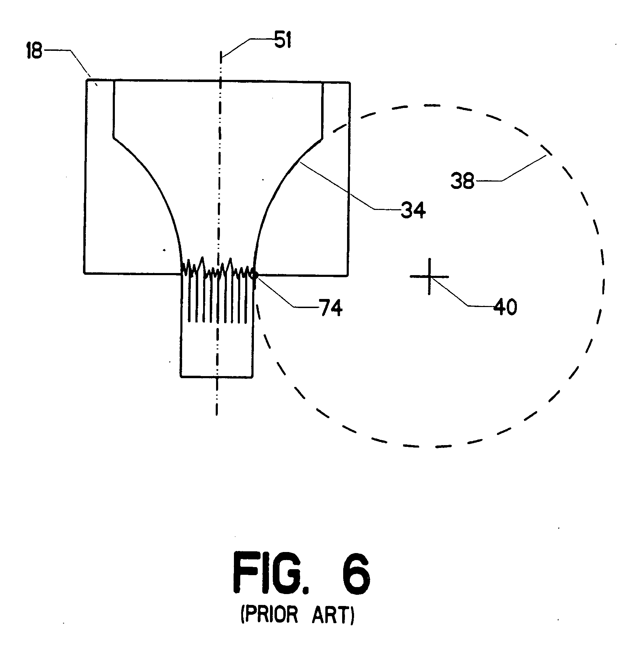

The reader will thereby perceive the differing and somewhat contradictory design goals present in the anchor's neck, mid, and distal regions. Several prior art anchors have attempted to reconcile these conflicting goals. FIG. 6 is a sectioned elevation view of one such prior art anchor. The wall profile is a revolved constant radius arc **38** (revolved around central axis **51**). Arc center **40** is positioned so that tangency point **74** is created with the cable at the point where the cable exits the anchor. Thus, the goal of creating tangency with the cable is met.

The goal of creating a shoulder in the mid region can also be met using a constant radius arc. The reader will observe in the example illustrated that the wall profile has a fairly steep slope in the mid region, thereby forming a suitable shoulder **34.** The problem with the use of the constant radius arc in this fashion is the slope existing between tangency point **74** and the shoulder. The wall's slope increases fairly rapidly as one proceeds from tangency point **74** toward the distal anchor boundary. A more gradually increasing slope is preferable, since this would allow the potted mass in the vicinity of the neck to elongate somewhat under tension. This elongation produces a more even stress distribution. However, the rapidly increasing slope inherent in the constant radius arc design prevents the solidified potted region in the vicinity of the neck from elongating without experiencing excessive compressive stress. Thus, the use of the constant radius arc tends to concentrate stress in the neck region. The result is an anchor which fails significantly below the ultimate tensile strength of the cable itself.

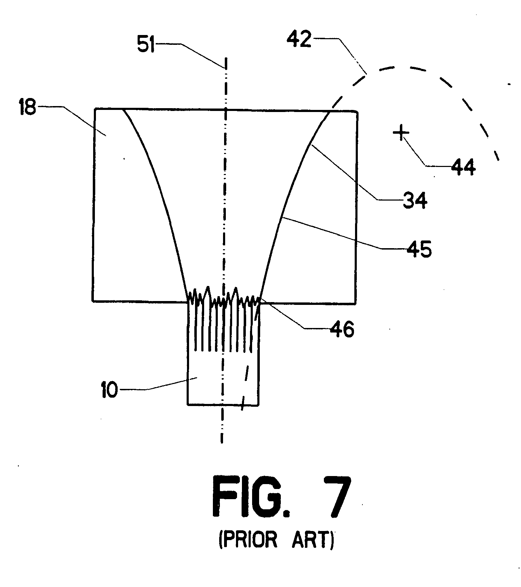

FIG. 7 shows another prior art geometry which attempts to address the problem of stress concentration in the neck region. In the anchor illustrated in FIG. 7, the revolved wall is defined by a portion of a parabola **42.** The parabola's focus **44** is positioned appropriately - and the constants governing the parabola are appropriately selected - to produce a wall profile such as shown. Parabolic wall **45** includes a shoulder **34** in the mid region. It also includes a slope in the neck region which is not rapidly changing (and therefore produces a reasonably even stress distribution in the neck region). However, the reader will observe the presence of non-tangent condition **46** at the neck anchor boundary. This non-tangent condition produces a significant stress concentration at the point where the cable exits the neck anchor boundary. The stress concentration is further amplified in the event the freely flexing portion of the cable is flexed laterally with respect to the anchor.

US3723636 discloses a termination device for a load bearing cable, which device comprises a housing having contoured side walls and an aperture for passing a cable. The device further comprises a first ellipsoidal member having a central bore arranged to receive a cable and a concentric second member arranged to conform to the contour of the first member so that it can be applied in an overlying relation thereto. A first set of helically preformed elements arranged to, in use, fasten the first member to a cable and a second set of helically preformed elements arranged to encircle the second member are provided.

US2005/173147 shows a termination anchor comprising a neck region, an intermediate region and a distal region. The anchor further comprises an passage which extends through the anchor from the neck region to the distal region and which passage is bounded by an internal surface. In use, exposed cable strands are secured in the passage with a liquid potting compound which solidifies to form a solidified potted region. This termination anchor improves the profile of the internal surface so that stress in the neck region is transferred to the mid region and the distal region; as a result, a more uniform stress distribution and a lower peak stress are achieved.

US2006062525 discloses a cable termination anchor having an expanding cavity and a straight portion with a circular expansion at its the lowest en. A liquid potting compound which solidifies over time is used to secure the cable in the anchor. The anchor reduces stress in the transition between the potted region and the freely flexing region of a cable when the cable flexes laterally relative to the anchor.

Those skilled in the art will readily appreciate that one way to create a tangent condition at the neck anchor boundary using a parabola is to make the outside diameter of the cable an asymptote of the parabola. Unfortunately, making the outside diameter of the cable an asymptote will mean that the parabolic wall profile will have insufficient slope to form the necessary mechanical interference. This explains why anchors using parabolic wall profiles have been forced to use a non-tangent condition at the neck anchor boundary. The result is an undesirable stress concentration in the neck region. Like the version using the constant radius arc, the termination of FIG. 7 tends to fail well short of the cable's ultimate tensile strength.

An ideal wall geometry will include a tangent condition at the neck anchor boundary, a shoulder in the mid region, and an appropriate stress distributing transition in the wall slope therebetween. The present invention achieves these goals, as will be explained.

SUMMARY OF THE PRESENT INVENTION

The present invention comprises an anchor having an internal passage defined by a revolved wall profile. The anchor is conceptually divided into four regions: a neck region, a transition region, a mid region, and a distal region. Each of these regions has its own design considerations. A portion of an ellipse is used to define at least part of the revolved wall profile. The use of an elliptical portion allows the anchor to be optimized for the different regions.

According to the present invention there is provided an anchor for use in creating a termination on a cable having a diameter, comprising: a neck anchor boundary; a distal anchor boundary (50); an internal passage (28) between said neck anchor boundary (48) and said distal anchor boundary (50), said internal passage (28) lying along a central axis (51); wherein said passage (28) is defined by a revolved wall profile revolved around said central axis (51); a coordinate system having an origin on the intersection between said neck anchor boundary (48) and said central axis (51), wherein said coordinate system includes an x axis extending perpendicularly to said central axis (51) and a y axis extending along said central axis (51); wherein the variable x is defined as the radius of said revolved wall profile at any distance y along said y axis; wherein at least a portion of said wall profile is defined by an ellipse (56) having a center (58), an axis in the x direction (62) equal to two times a, and an axis in the y direction (60) equal to two times b; wherein said center (58) of said ellipse (56) is offset a distance *Lat. Offset* in the x direction from said origin and a distance *Long. Offset* in the y direction from said origin; wherein said elliptical portion of said revolved wall profile is defined by the expression: $$x = Lat.Offset - \sqrt{a^2 \bullet (1 - \frac{(y - Long.Offset)^2}{b^2}}$$

wherein said axis in said y direction (60) is parallel to said central axis (51); characterized in that said portion of said wall profile defined by said ellipse (56) lies between said axis in said y direction (60) and said central axis (51); and slope of said elliptical portion referred to said central axis (51) is always increasing in a direction from said neck anchor boundary (48) to said distal anchor boundary (50).

Other advantageous features are claimed in the sub-claims.

BRIEF DESCRIPTION OF DRAWINGS

FIG. 1 is a perspective view, showing a prior art termination.
FIG. 2 is a sectioned perspective view, showing internal features of a prior art termination.
FIG. 3 is a sectioned and exploded perspective view, showing internal features of a prior art termination.
FIG. 4 is a sectioned elevation view, showing internal features of a prior art termination.
FIG. 5 is an exploded elevation view, showing the conflicting design constraints for different regions of a termination.
FIG. 6 is a sectioned elevation view, showing a prior art design using a wall profile incorporating a constant radius arc.
FIG. 7 is a sectioned elevation view, showing a prior art design using a wall profile incorporating a portion of a parabola.
FIG. 8 is an exploded elevation view, showing the conflicting design constraints for different regions of a termination.
FIG. 9 is a sectioned elevation view, showing the present invention.
FIG. 9B is an elevation view, showing an ellipse with respect to the origin of a coordinate system.
FIG. 9C is an elevation view, showing an ellipse that has been offset from the origin of a coordinate system.
FIG. 10 is a sectioned elevation view, showing another embodiment of the present invention.
FIG. 11 is sectioned elevation view, showing the use of a combined elliptical and constant radius wall profile.
FIG. 12 is a sectioned elevation view, showing another embodiment of the present invention.
FIG. 13 is a sectioned elevation view, showing another embodiment of the present invention.

REFERENCE NUMERALS IN THE DRAWINGS

| | | | |
|---|---|---|---|
| 10 | cable | 14 | termination |
| 16 | potted region | 18 | anchor |
| 20 | potting transition | 22 | neck region |
| 24 | mid region | 26 | distal region |
| 28 | internal passage | 30 | flexible region |
| 32 | tangent wall | 34 | shoulder |
| 36 | extension wall | 38 | constant radius arc |
| 40 | arc center | 42 | parabola |
| 44 | focus | 45 | parabolic wall |
| 46 | non-tangent condition | 48 | neck anchor boundary |
| 50 | distal anchor boundary | 51 | central axis |
| 52 | transition region | 54 | transition wall |
| 56 | ellipse | 58 | ellipse center |
| 60 | major axis | 62 | minor axis |
| 64 | lateral offset | 66 | elliptical wall |
| 67 | gap | 68 | tangent point |
| 70 | longitudinal offset | 72 | straight wall |
| 74 | tangency point | 78 | fillet |
| 80 | load bearing flange | 82 | fillet |
| 84 | curved wall | | |

## DETAILED DESCRIPTION OF EMBODIMENTS

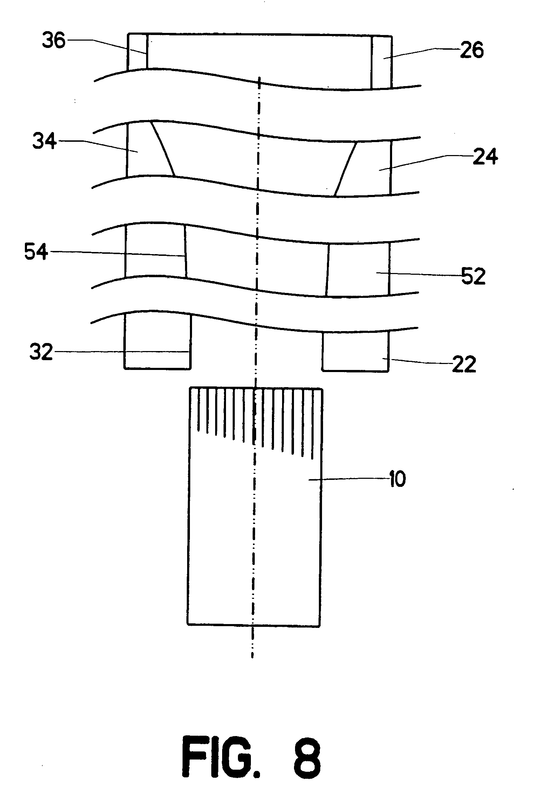

FIG. 8 shows a conceptualized view of an ideal anchor, having a wall profile optimized for each region within the anchor. One of the important concepts in the present invention is the fact that the wall slope must be suitably controlled between a tangent condition at the neck anchor boundary and the shoulder located in the mid region. This goal introduces the concept of a fourth region within the anchor. Thus, the anchor shown in FIG. 8 is divided into four regions: neck region **22,** transition region **52,** mid region **24,** and distal region **26.**

In optimizing an anchor, one should consider the wall profiles needed in each of these regions. As previously stated, the wall is preferably tangent to the cable's external diameter within neck region **22.** Thus, tangent wall **32** is included. As also previously stated, the inclusion of shoulder **34** within mid region **24** is desirable. Transition region **52** has been identified between neck region **22** and mid region **24,** because the inventor has discovered that the wall slope within this transition region is significant to the ultimate breaking strength of the termination. Transition wall **54** is a portion of the profile in which the slope varies in a controlled fashion between the slope of tangent wall **32** and the slope of shoulder **34.**

It is preferable to have the wall slope over the neck region, the transition region, and the mid region controlled by a single function, rather than having to employ multiple functions with tangent conditions at the intersections between the functions. There is in fact a single function which achieves these objectives while still providing the necessary control over the wall slope. That function is an ellipse.

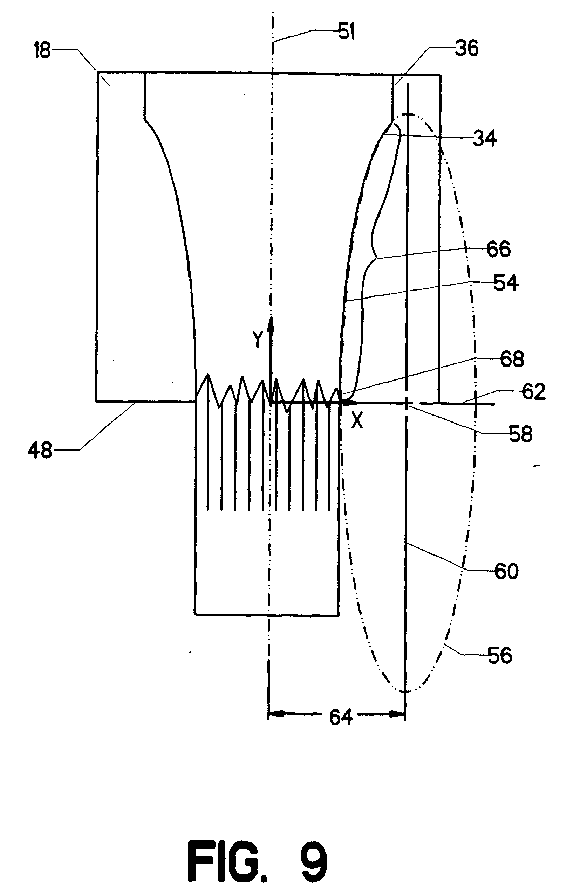

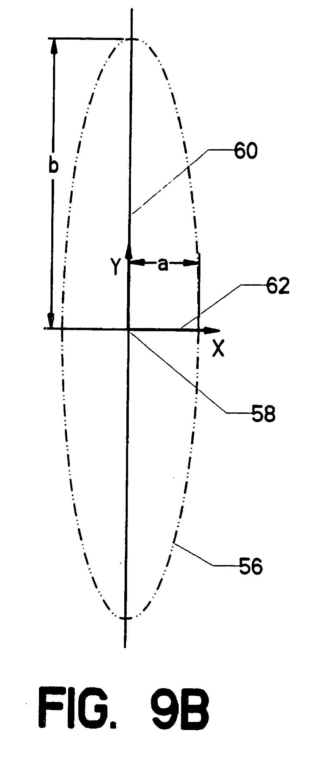

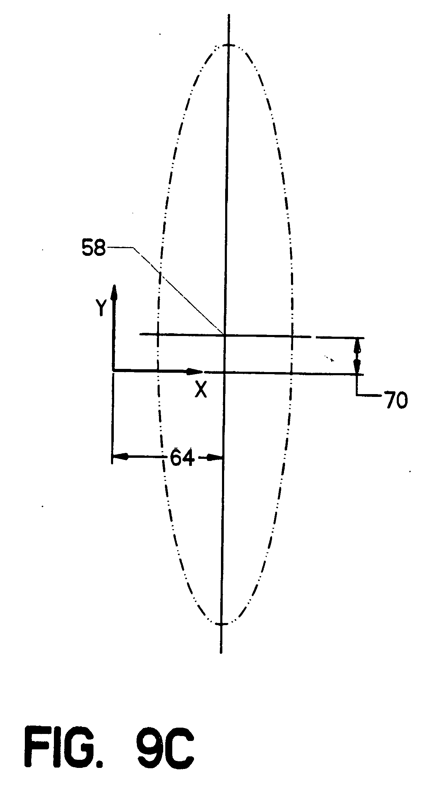

FIG. 9 shows an anchor **18** having a wall profile made according to the present invention. Ellipse **56** is used to define a portion of the wall profile designated as elliptical wall **66.** As those skilled in the art will know, ellipse **56** is defined by defining ellipse center **58,** major axis **60,** and minor axis **62.** FIG. 9 also shows an X-Y coordinate system centered on the intersection between central axis **51** and neck anchor boundary **48.** This origin can be used to define the mathematics of the ellipse.

FIG. 9B shows an ellipse **56** having ellipse center **58** placed on the origin of the coordinate system. Minor axis **62** extends a length *a* from either side of the origin along the X axis. Major axis **60** extends a length *b* up and down from the origin along the Y axis (The reader should bear in mind that the terms "major axis" and "minor axis" are somewhat arbitrary, with the term "major" being used to designate the longer of the two). The ellipse is defined by the expression:

$$\frac{x^2}{a^2} + \frac{y^2}{b^2} = 1$$

Of course, in order to define the wall profile, the ellipse must be offset from the origin located at the intersection of central axis **51** and neck anchor boundary **48.** FIG. 9C graphically depicts these offsets. Ellipse center **58** is offset a distance equal to lateral offset **64** ("*Lat. Offset*") along the X Axis. This offset is necessary in order to place elliptical wall **66** in the correct position. FIG. 9C also shows how ellipse center **58** can be offset a distance equal to longitudinal offset **70** ("*Long. Offset*") along the Y Axis. This offset is optional, but is advantageous in some circumstances (as will be explained subsequently).

The equation defining the ellipse with the incorporated offsets is written as:

$$\frac{(x - Lat.Offset)^2}{a^2} + \frac{(y - Long.Offset)^2}{b^2} = 1$$

The radius of the wall profile at any point along the central axis is the variable $x$ in this expression. In order to solve for $x$, the expression can be rewritten as:

$$(x - Lat.Offset)^2 = a^2 \bullet (1 - \frac{(y - Long.Offset)^2}{b^2}$$

More algebraic manipulation allows this to be rewritten as:

$$x = Lat.Offset \pm \sqrt{a^2 \bullet (1 - \frac{(y - Long.Offset)^2}{b^2}}$$

The equation gives two values for $x$ for each value of $y$. With respect to FIG. 9C, the left side of the ellipse is the portion used to define the elliptical wall. Thus, the desired value for $x$ should be written as:

$$x = Lat.Offset - \sqrt{a^2 \bullet (1 - \frac{(y - Long.Offset)^2}{b^2}}$$

Returning now to the embodiment of FIG. 9, the reader will observe that ellipse **56** includes a lateral offset **64** but no longitudinal offset. The lateral offset and the length of the minor axis are selected so that the elliptical wall profile is tangent to the cable's outer diameter at neck anchor boundary **48** (indicated as tangent point **68**). The length of the major axis is selected so that an appropriate shoulder **34** is formed in the anchor's mid region.

Elliptical wall **66** may therefore be conceptually divided into three regions. These are: (1) tangent point **68** proximate neck anchor boundary **48,** (2) shoulder **34** in the anchor's mid region, and (3) transition wall **54** between the tangent point and the shoulder. The reader will observe that the single ellipse definition produces the appropriate wall shape in each of these regions.

The elliptical wall can be combined with other known features as well. In FIG. 9, as one example, the elliptical wall is not carried through to the distal anchor boundary. It is instead discontinued in favor of extension wall **36** near the distal anchor boundary. As explained previously, the stress levels proximate the distal anchor boundary are relatively low. Thus, additional expansion of the internal passage is not needed and an extension wall having only a moderate slope (or even no slope or a negative slope) can be used. The intersection between elliptical wall **66** and extension wall **36** is shown as a sharp corner. As the anchor would typically be a machined part, it is preferable to include a fillet at this intersection. The fillet can be large or small, as desired.

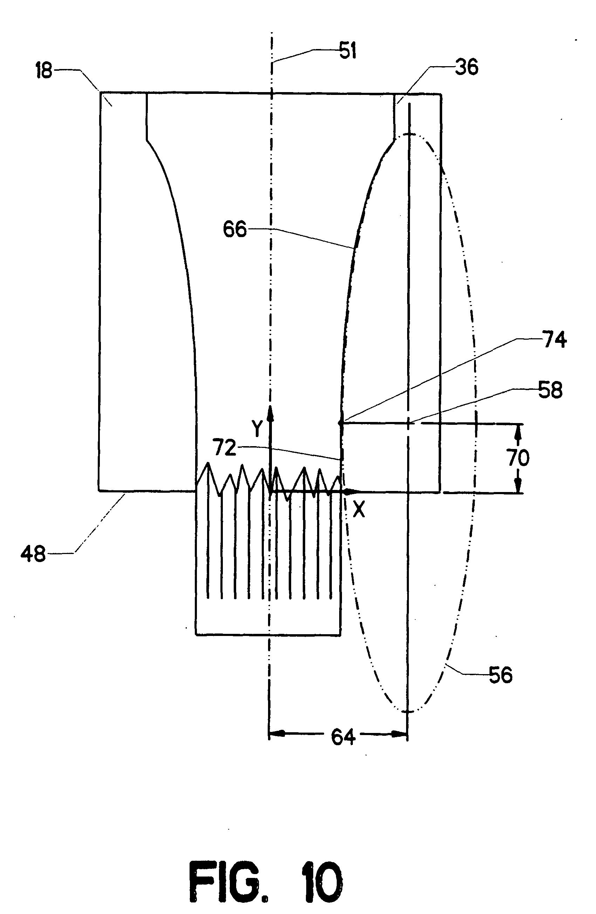

FIG. 10 shows the combination of an elliptical wall with another known wall geometry. Straight wall **72** is used for a portion proximate the neck anchor boundary. Accordingly, ellipse center **58** must be shifted upward (with respect to the orientation shown in the view) a distance equal to longitudinal offset **70**. Tangency point **74** lies at the intersection between elliptical wall **66** and straight wall **72**. The inclusion of straight wall **72** can provide a more uniform potting transition **20**. It is also helpful in some instances to include a length of unpotted strands within the anchor in the region of the neck anchor boundary. Straight wall **72** can be used for this purpose as well.

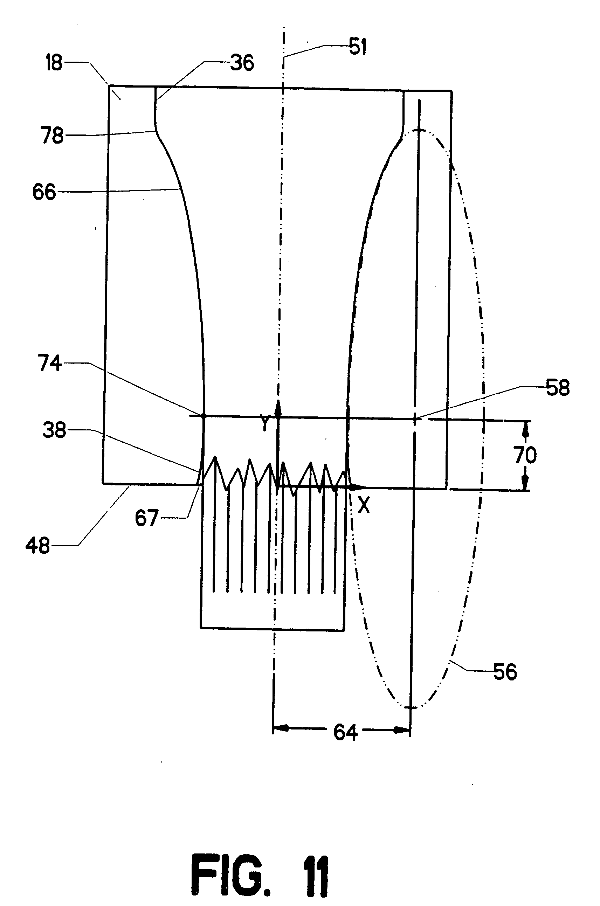

FIG. 11 shows an embodiment in which the elliptical wall profile is combined with a prior art constant radius arc profile. Constant radius arc **38** is located proximate the neck anchor boundary. The arc can be positioned so that a small gap **67** exists between the wall and the cable at the point where the cable exits the anchor (the wall actually bends away from the cable diameter at this point). This gap can be beneficial for instances where the cable flexes laterally with respect to the anchor. The constant radius arc and the elliptical wall are positioned so that tangency point **74** lies at the intersection between the two. This provides a smooth transition between the two types of walls. The reader will note that both a lateral and a longitudinal offset are needed for the ellipse in this case.

The embodiment of FIG. 11 also includes a straight wall **36** near the distal anchor boundary. A fillet **78** is shown between straight wall **36** and elliptical wall **66**. The internal passage is typically machined out of a piece of round stock, either on a lathe or automatic screw machine. Thus, it is typical for the size of fillet **78** to be determined by the radius that is present on the cutting tool.

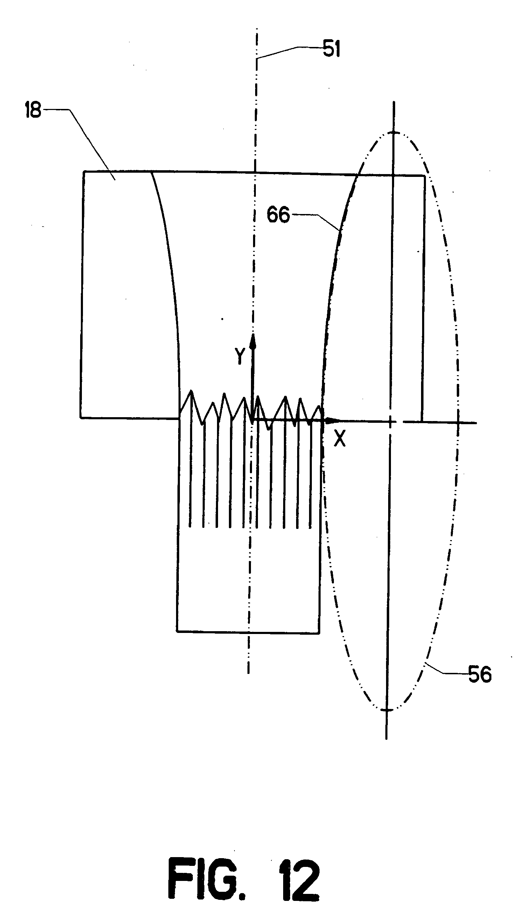

Although it is certainly possible to combine the elliptical wall profile with other shapes, it is also possible to use an elliptical wall profile for the entire internal passage. FIG. 12 shows such an embodiment. Ellipse **56** is used to define an elliptical wall **66**. Elliptical wall 66 is present from the neck anchor boundary to the distal anchor boundary. Thus, the reader should understand that the inclusion of a straight wall or any other variation from the elliptical wall in the vicinity of the distal anchor boundary is purely optional. In many embodiments the elliptical wall will simply be carried through to the distal anchor boundary with no other feature being included.

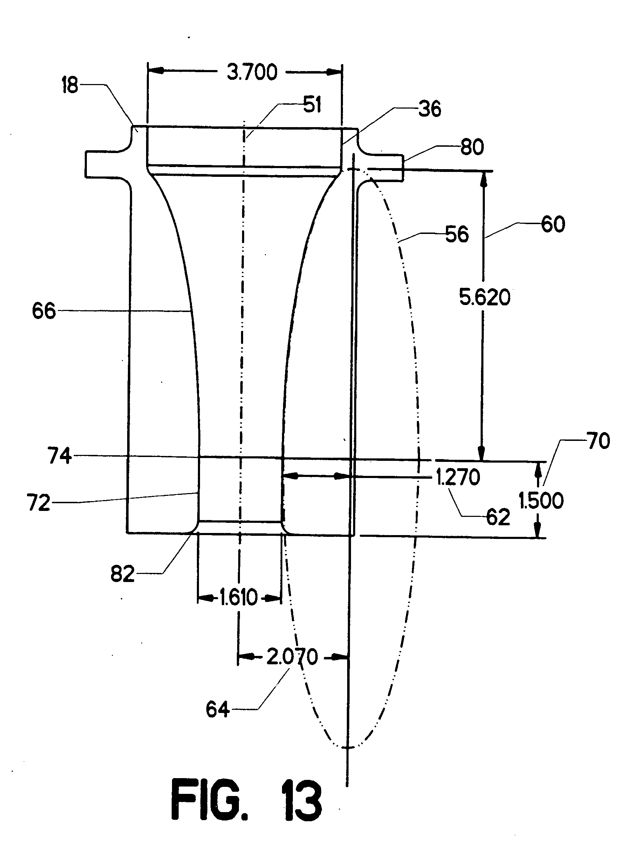

Some dimensioned examples may be helpful to the reader's understanding of the present invention. FIG. 13 is a sectioned elevation view showing one such example. Anchor 18 is designed to be attached to the end of a cable having a diameter of about 40.4 mm (1.590 inches). The distal region of the anchor includes load bearing flange 80. This flange will be used to transmit a tensile load from the cable to an external object.

The portion of the internal passage intersecting the neck anchor boundary is straight wall 72 having a diameter of 40.9 mm (1.610 inches). Fillet 82 is located on the intersection of straight wall 72 and the neck anchor boundary. The straight wall continues toward the distal anchor boundary for a length of 38.1 mm (1.500 inches) (which length becomes longitudinal offset 70 for ellipse 56). Ellipse center 58 is given a lateral offset 64 of 52.6 mm (2.070 inches) and a longitudinal offset 70 of 38.1 mm (1.500 inches). The result is the creation of tangency point 74 between straight wall 72 and elliptical wall 66.

Elliptical wall 66 continues to flare as it proceeds toward the distal anchor boundary. Extension wall 36 is provided proximate the distal anchor boundary itself. The particular extension wall shown defines a cylindrical portion of the internal passage having a diameter of 94.0 mm (3.700 inches). The anchor geometry thus described results in a very high breaking strength for a properly-potted termination.

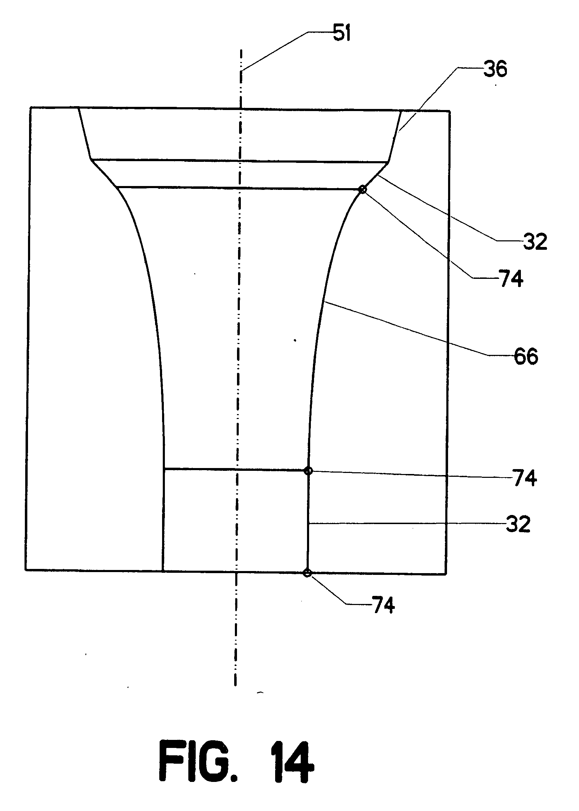

The elliptical wall profile can be combined with many other known geometries to produce advantages in particular situations. FIG. 14 shows a wall profile in which elliptical wall 66 is combined with a tangent wall 32 (proximate the neck anchor boundary) and a second tangent wall 32 near extension wall 36. The tangent wall proximate the neck anchor boundary provides a smooth transition to the freely flexing portion of the cable. The tangent wall near extension wall 36 extends the length of the shoulder while maintaining the slope of the distal portion of elliptical wall 66.

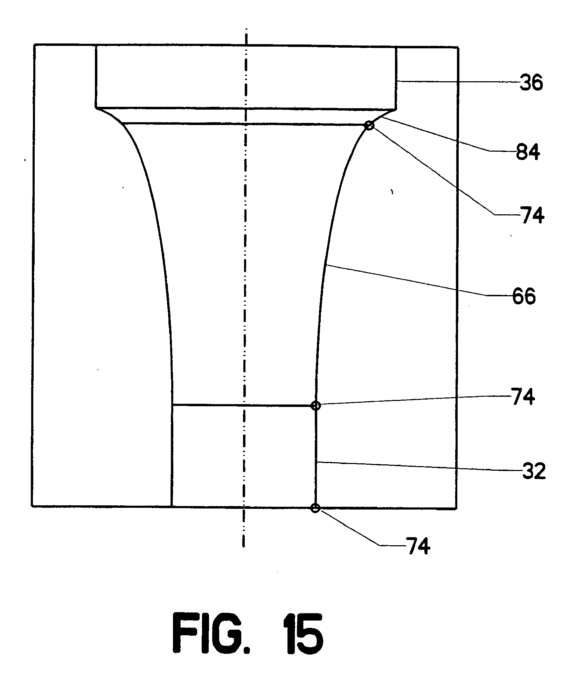

FIG. 15 shows another embodiment where the distal portion of elliptical wall **66** is joined to curved wall **84**. Curved wall **84** can be a constant radius arc, a second order function, or a higher order function. The junction between elliptical wall **66** and curved wall **84** is preferably a tangency point **74**. Those skilled in the art will know that perfect tangency is difficult to achieve during machining operations. However, it is preferable to create a junction which is at least close to being tangent and which avoids the presence of a sharp corner. The reader should bear in mind that the creation of a near-tangency will generally be sufficient (true for all the embodiments of this disclosure). Thus, when the term "tangent" is used, the reader should understand this term to encompass approximate tangencies as well.

The various curved walls shown joined to the end of the elliptical portion proximate the distal anchor boundary can also be joined to the end of the elliptical portion proximate the neck anchor boundary. Thus, second order or higher curves could be used in this region as well.

Thus, the reader will appreciate that the use of an elliptical wall profile for at least a portion of the revolved wall defining the internal passage through an anchor produces significant advantages. Those skilled in the art will know that the parameters defining the elliptical wall (such as the values for the major axis, the minor axis, the lateral offset, and the longitudinal offset) can be optimized for each specific application.

Although the preceding description contains significant detail, it should not be construed as limiting the scope of the invention but rather as providing illustrations of the preferred embodiments of the invention. As an example, the wall profile features described in the disclosure could be mixed and combined to form many more permutations than those illustrated. The claims language to follow describes many profiles in terms of precise mathematical functions. Those skilled in the art will know that when actual parts are manufactured, these mathematical functions will be approximated and not recreated exactly. Thus, the language used in the claims is intended to describe the general nature of the wall profiles. It will be understood that physical examples of anchors falling under the claims may deviate somewhat from the precise mathematical equations.

**Claims**

1. An anchor for use in creating a termination on a cable (10) having a diameter, comprising:

     a. a neck anchor boundary (48);
     b. a distal anchor boundary (50);
     c. an internal passage (28) between said neck anchor boundary (48) and said distal anchor boundary (50), said internal passage (28) lying along a central axis (51);
     d. wherein said passage (28) is defined by a revolved wall profile revolved around said central axis (51);
     e. a coordinate system having an origin on the intersection between said neck anchor boundary (48) and said central axis (51), wherein said coordinate system includes an X axis extending perpendicularly to said central axis (51) and a Y axis extending along said central axis (51);
     f. wherein the variable x is defined as the radius of said revolved wall profile at any distance y along said Y axis;
     g. wherein at least a portion of said wall profile is defined by an ellipse (56) having a center (58), an axis in the X direction (62) equal to two times a, and an axis in the Y direction (60) equal to two times b;
     h. wherein said center (58) of said ellipse (56) is offset a distance *Lat. Offset* in the X direction from said origin and a distance *Long. Offset* in the Y direction from said origin;
     i. wherein said elliptical portion of said revolved wall profile is defined by the expression

$$x = Lat.Offset - \sqrt{a^2 \bullet (1 - \frac{(y - Long.Offset)^2}{b^2})};$$

     j. wherein said axis in said Y direction (60) is parallel to said central axis (51); **characterized in that**
     k. said portion of said wall profile defined by said ellipse (56) lies between said axis in said Y direction (60) and said central axis (51); and
     l. a slope of said elliptical portion referred to said central axis (51) is always increasing in a direction from said neck anchor boundary (48) to said distal anchor boundary (50).

2. An anchor as recited in claim 1, wherein the value for said *Long. Offset* is zero.

3. An anchor as recited in claim 1, wherein when a cable is inserted in the anchor:

     a. said elliptical portion of said revolved wall profile begins proximate said neck anchor boundary (48); and
     b. at the beginning of said elliptical portion of said revolved wall profile, the diameter of said internal passage (28) is approximately equal to a diameter of said cable (10).

4. An anchor as recited in claim 1, wherein

     a. said elliptical portion of said revolved profile has a beginning and an end; and
     b. said end of said elliptical portion of said revolved wall profile lies proximate said distal anchor boundary (50).

5. An anchor as recited in claim 6, further comprising an extension wall (36) portion lying between said end of said elliptical wall profile and said distal anchor boundary (50).

6. An anchor as recited in claim 7, wherein said extension wall (36) portion and said end of said elliptical portion of said revolved wall profile are joined by a fillet (78).

7. An anchor as recited in claim 6, further comprising a first straight wall portion lying between said neck anchor boundary (48) and said beginning of said elliptical portion of said revolved wall profile, wherein said first straight wall (72) portion is tangent to said elliptical portion of said revolved wall profile at said beginning of said elliptical portion of said revolved wall profile.

8. An anchor as recited in claim 9, further comprising an extension wall (36) portion lying between said end of said elliptical portion of said revolved wall profile and said distal anchor boundary (50).

9. An anchor as recited in claim 1, wherein:

     a. said elliptical portion has a beginning and an end;

b. said end of said elliptical portion lies proximate said distal anchor boundary (50); and

c. said revolved wall profile further comprises a tangent wall (32) lying between said end of said elliptical portion and said distal anchor boundary (50), with said tangent wall (32) being tangent to said end of said elliptical portion.

**10.** An anchor as recited in claim 2, wherein:

a. said elliptical portion has a beginning and an end;

b. said end of said elliptical portion lies proximate said distal anchor boundary (50); and

c. said revolved wall profile further comprises a curved wall (84) lying between said end of said elliptical portion and said distal anchor boundary (50), with said curved wall (84) being tangent to said end of said elliptical portion.

**11.** An anchor as recited in claim 1, wherein said revolved wall profile further comprises a curved wall (84) lying between said neck anchor boundary (48) and said elliptical portion.

**12.** An anchor as recited in any prior claim, wherein when a cable is inserted in the anchor, the value of said *Lat. Offset* is about equal to one-half a diameter of said cable plus said value of a.

**13.** An anchor as recited in any prior claim, further comprising a straight wall (72) portion lying between said neck anchor boundary (48) and said beginning of said elliptical portion of said revolved wall profile.

**Patentansprüche**

**1.** Anker zur Anwendung bei der Herstellung eines Abschlusses an einem Kabel (10) mit einem Durchmesser, umfassend:

a. einen Hals-Ankerrand (48);

b. einen distalen Ankerrand (50);

c. einen Innenkanal (28) zwischen dem besagten Hals-Ankerrand (48) und dem besagten distalen Ankerrand (50), wobei der besagte Innenkanal (28) entlang einer Mittelachse (51) liegt;

d. wobei der besagte Innenkanal (28) von einem die besagte Mittelachse (51) umlaufenden Wandprofil definiert wird;

e. ein Koordinatensystem, das vom Schnittpunkt zwischen dem besagten Hals-Ankerrand (48) und der besagten Mittelachse (51) ausgeht, wobei das besagte Koordinatensystem eine X-Achse, die senkrecht zur besagten Mittelachse (51) verläuft, und eine Y-Achse, die entlang der besagten Mittelachse (51) verläuft, umfasst;

f. wobei die Größe x als der Radius des besagten umlaufenden Wandprofils an einer beliebigen Stelle y entlang der besagten Y-Achse definiert wird;

g. wobei mindestens eine Partie des besagten Wandprofils von einer Ellipse (56) definiert wird, die einen Mittelpunkt (58), eine Achse in der X-Richtung (62) gleich zwei mal a und eine Achse in der Y-Richtung (60) gleich zwei mal b aufweist;

h. wobei der besagte Mittelpunkt (58) der besagten Ellipse (56) um einen Weg *Lat. Offset* in der X-Richtung vom besagten Ausgangspunkt und um einen Weg *Long. Offset* in der Y-Richtung vom besagten Ausgangspunkt versetzt ist,

i. wobei die besagte elliptische Partie des besagten umlaufenden Wandprofils durch den Ausdruck

$$x = Lat.Offset - \sqrt{a^2 \bullet (1 - \frac{(y - Long.Offset)^2}{b^2}}.$$

definiert wird;

j. wobei die besagte Achse in Y-Richtung (60) parallel zur besagten Mittelachse (51) verläuft; **dadurch gekennzeichnet, dass**

k. die besagte durch die besagte Ellipse (56) definiertePartie des besagten Wandprofils zwischen der besagten Achse in der besagten Y-Richtung (60) und der besagten Mittelachse (51) liegt; und

l. eine Schräge der besagten auf die besagte Mittelachse (51) bezogenen elliptischen Partie immer in der Richtung vom besagten Hals-Ankerrand (48) zum besagten distalen Ankerrand (50) hin zunimmt.

**2.** Anker nach Anspruch 1, wobei der Wert für die besagte Größe *Long.Offset* null ist.

**3.** Anker nach Anspruch 1, wobei beim Einschieben eines Kabels in den Anker:

a. die besagte elliptische Partie des besagten umlaufenden Wandprofils im Nahbereich des besagten Hals-Ankerrandes (48) beginnt; und
b. am Anfang der besagten elliptischen Partie des besagten umlaufenden Wandprofils der Durchmesser des besagten Innenkanal (28) ungefähr einem Durchmesser des besagten Kabels (10) gleich ist.

**4.** Anker nach Anspruch 1, wobei

a. die besagte elliptische Partie des besagten umlaufenden Wandprofils einen Anfang und ein Ende aufweist; und
b. das besagte Ende der besagten elliptischen Partie des besagten umlaufenden Wandprofils im Nahbereich des besagten distalen Ankerrandes (50) liegt.

**5.** Anker nach Anspruch 6, weiter umfassend eine Verlängerungswandpartie (36), die zwischen dem besagten Ende des besagten elliptischen Wandprofils und dem besagten distalen Ankerrand (50) liegt.

**6.** Anker nach Anspruch 7, wobei die besagte Verlängerungswandpartie (36) und das besagte Ende der besagten elliptischen Partie des besagten umlaufenden Wandprofils von einer Auskehlung (78) miteinander verbunden sind.

**7.** Anker nach Anspruch 6, weiter umfassend eine erste gerade Wandpartie, die zwischen dem besagten Hals-Ankerrand (48) und dem besagten Anfang der besagten elliptischen Partie des besagten umlaufenden Wandprofils liegt, wobei die besagte erste gerade Wandpartie (72) tangential zur besagten elliptischen Partie des besagten umlaufenden Wandprofils am besagten Anfang der besagten elliptischen Partie des besagten umlaufenden Wandprofils verläuft.

**8.** Anker nach Anspruch 9, weiter umfassend eine Verlängerungswandpartie (36), die zwischen dem besagten Ende der besagten elliptischen Partie des besagten umlaufenden Wandprofils und dem besagten distalen Ankerrand (50) liegt.

**9.** Anker nach Anspruch 1, wobei:

a. die besagte elliptische Partie einen Anfang und ein Ende aufweist;
b. das besagte Ende der besagten elliptischen Partie im Nahbereich des besagten distalen Ankerrandes (50) liegt; und
c. das besagte umlaufende Wandprofil weiter eine Tangentialwand (32) umfasst, die zwischen dem besagten Ende der besagten elliptischen Partie und dem besagten distalen Ankerrand (50) liegt, wobei die besagte Tangentialwand (32) tangential zum besagten Ende der besagten elliptischen Partie verläuft.

**10.** Anker nach Anspruch 2, wobei:

a. die besagte elliptische Partie einen Anfang und ein Ende aufweist;
b. das besagte Ende der besagten elliptischen Partie im Nahbereich des besagten distalen Ankerrandes (50) liegt; und
c. das besagte umlaufende Wandprofil weiter eine gebogene Wand (84) umfasst, die zwischen dem besagten Ende der besagten elliptischen Partie und dem besagten distalen Ankerrand (50) liegt, wobei die besagte gebogene Wand (84) tangential zum besagten Ende der besagten elliptischen Partie verläuft.

**11.** Anker nach Anspruch 1, wobei das besagte umlaufende Wandprofil weiter eine eine gebogene Wand (84) umfasst, die zwischen dem besagten als-Ankerrand (48) und der besagten elliptischen Partie verläuft.

**12.** Anker nach einem der vorhergehenden Ansprüche, wobei beim Einschieben eines Kabels in den Anker der Wert der Größe *Lat. Offset* ungefähr einem halben Durchmesser des besagten Kabels plus dem besagten Wert a gleich ist.

**13.** Anker nach einem der vorhergehenden Ansprüche, weiter umfassend eine gerade Wandpartie (72), die zwischen besagten Hals-Ankerrand (48) und dem besagten Anfang der besagten elliptischen Partie des besagten umlaufenden Wandprofils liegt,

**Revendications**

1. Ancre destinée à être utilisée dans la création d'une terminaison sur un câble (10) présentant un diamètre, comprenant :

    a) une limite d'ancre de col (48);
    b) une limite d'ancre distale (50);
    c) un passage interne (28) entre ladite limite d'ancre de col (48) et ladite limite d'ancre distale (50), ledit passage interne (28) se situant le long d'un axe central (51) ;
    d) ledit passage (28) étant défini par un profilé de paroi rabattu autour dudit axe central (51)
    e) un système de coordonnées ayant son origine sur l'intersection entre la limite d'ancre de col (48) et ledit axe central (51), ledit système de coordonnées comprenant un axe x s'étendant perpendiculairement audit axe central (51) et un axe y s'étendant le long dudit axe central (51) ;
    f) la variable x étant définie comme le rayon dudit profilé de paroi rabattu à n'importe quelle distance y le long dudit axe y ;
    g) au moins une partie dudit profilé de paroi étant défini par une ellipse (56) ayant un centre (58), un axe dans la direction x (62) égal à deux fois a, et un axe dans la direction y (60) égal à deux fois b ;
    h) ledit centre (58) de ladite ellipse (56) est décalé d'une certaine distance *Lat.Offset* dans la direction x à partir de ladite origine et une distance *Long.Offset* dans la direction y à partir de ladite origine ;
    i) ladite partie elliptique dudit profilé de paroi rabattu étant définie par l'expression

$$x = Lat.Offset - \sqrt{a^2} \bullet (1 - \frac{(y - Long.Offset)^2}{b^2})$$

    j) ledit axe dans ladite direction y (60) étant parallèle avec ledit axe central (51) **caractérisée en ce que**
    k) ladite partie dudit profilé de paroi définie par ladite ellipse (56) se situe entre ledit axe dans ladite direction y (60) et ledit axe central (51) ; et
    l) une pente de ladite partie elliptique par rapport audit axe central (51) est toujours croissante dans une direction à partir de ladite limite d'ancre de col (48) vers ladite limite d'ancre distale (50).

2. Ancre selon la revendication 1, la valeur pour ladite *Long.Offset* étant zéro.

3. Ancre selon la revendication 1, lorsqu'un câble est inséré dans l'ancre :

    a) ladite partie elliptique dudit profilé de paroi rabattu commençant à proximité de ladite limite d'ancre de col (48) ; et
    b) au début de ladite partie elliptique dudit profilé de paroi rabattu, le diamètre dudit passage interne (28) étant approximativement égal à un diamètre dudit câble (10).

4. Ancre selon la revendication 1,

    a. ladite partie elliptique dudit profilé de paroi rabattu présentant un début et une fin ; et
    b. ladite fin de ladite partie elliptique dudit profilé de paroi rabattu se situant à proximité de ladite limite d'ancre de col (50).

5. Ancre selon la revendication 6, comprenant en outre une partie de paroi d'extension (36) située entre ladite fin dudit profilé de paroi elliptique et ladite limite d'ancre distale (50).

6. Ancre selon la revendication 7, ladite partie de paroi d'extension (36) et ladite extrémité de ladite partie elliptique dudit profilé de paroi rabattu sont assemblés par un congé (78).

7. Ancre selon la revendication 6, comprenant en outre une première partie de paroi droite située entre ladite limite (48) d'ancre de col et ledit début de ladite partie elliptique dudit profilé de paroi rabattu, ladite première partie de paroi (72) droite étant tangente à ladite partie elliptique dudit profilé de paroi rabattu au niveau du début de ladite partie elliptique dudit profilé de paroi rabattu.

8. Ancre selon la revendication 9, comprenant en outre une partie de paroi d'extension (36) située entre ladite extrémité de ladite partie elliptique dudit profilé de paroi rabattu et ladite limite d'ancre distale (50).

**9.** Ancre selon la revendication 1,

a) ladite partie elliptique présentant un début et une extrémité ;
b) ladite extrémité de ladite partie elliptique se situe à proximité de ladite limite d'ancre distale (50) ;
c) ledit profilé de paroi rabattu comprenant en outre une paroi tangente (32) située entre ladite partie elliptique et ladite limite d'ancre distale (50), ladite paroi tangente étant tangente à ladite extrémité de ladite partie elliptique.

**10.** Ancre selon la revendication 2,

a) ladite partie elliptique présentant un début et une extrémité ;
b) ladite extrémité de ladite partie elliptique se situant à proximité de ladite limite d'ancre distale (50) ; et
c) ledit profilé de paroi rabattu comprenant en outre une paroi incurvée (84) située entre ladite extrémité de ladite partie elliptique et ladite limite d'ancre distale (50), ladite paroi incurvée (84) étant tangente à ladite extrémité de ladite partie elliptique.

**11.** Ancre selon la revendication 1, ledit profilé de paroi rabattu comprenant en outre une paroi incurvée (84) située entre ladite limite d'ancre de col (48) et ladite partie elliptique.

**12.** Ancre selon l'une quelconque des revendications précédentes, lorsqu'un câble est inséré dans l'ancre, la valeur de ladite *Lat.Offset* étant approximativement égale à une moitié d'un diamètre dudit câble plus ladite valeur de a.

**13.** Ancre selon l'une quelconque des revendications précédentes, comprenant en outre une partie de paroi droite (72) située entre ladite limite d'ancre de col (48) et ledit début de ladite partie elliptique dudit profilé de paroi rabattu.

16

18

14

10

# FIG. 1

(PRIOR ART)

# FIG. 2
(PRIOR ART)

FIG. 3
(PRIOR ART)

# FIG. 4

(PRIOR ART)

**FIG. 5**

(PRIOR ART)

**FIG. 6**

(PRIOR ART)

# FIG. 7
## (PRIOR ART)

## FIG. 8

FIG. 9

**FIG. 9B**

FIG. 9C

**FIG. 10**

FIG. 11

# FIG. 12

FIG. 13

FIG. 14

FIG. 15

**EP 2 245 334 B1**

**Patent documents cited in the description**

- US 3723636 A
- US 2005173147 A
- US 2006062525 A